# EUROPEAN PATENT SPECIFICATION

(11) **EP 2 476 792 B1**
(45) Date of publication and mention of the grant of the patent: **03.01.2018**
(21) Application number: 12150853.5
(22) Date of filing: 12.01.2012
(51) Int. Cl.: D06F 39/02, A47L 15/44

(54) **Washing Machine**
Waschmaschine
Machine à laver

(30) Priority: 17.01.2011 KR 20110004383
(43) Date of publication of application: 18.07.2012
(60) Divisional application: 17174852.8
(73) Proprietor: Samsung Electronics Co., Ltd., Suwon-si, Gyeonggi-do, 443-742 (KR)
(72) Inventor: Song, Weon Jin, Gyeonggi-do (KR); Lee, Song Yik, Gyeonggi-do (KR); Song, Hyun Woo, Gyeonggi-do (KR)
(74) Representative: Grünecker Patent- und Rechtsanwälte PartG mbB

(56) References cited:
- EP-A1- 2 003 237
- EP-A1- 2 251 480
- EP-A2- 1 884 584
- WO-A1-2009/142355
- US-A1- 2003 145 633
- US-A1- 2008 235 880
- US-A1- 2010 000 264
- US-A1- 2010 000 586
- US-A1- 2011 186 098

## Description

### BACKGROUND

### 1. Field

Embodiments relate to a washing machine with a detergent supply device which automatically supplies a liquid detergent and/or manually supplies a powdery detergent.

### 2. Description of the Related Art

In general, a washing machine is an apparatus which includes a tub containing water and a drum rotatably installed within the tub, and washes laundry by rotating the drum in which the laundry is placed within the tub.

Such a washing machine further includes a detergent supply device to supply a detergent used for washing to the tub. Recently, a washing machine to which a detergent supply device to use a liquid detergent easily dissolving in water as compared with a powdery detergent has been developed.

US 2010/000264 A1 discloses a method for converting a household cleaning appliance with a non-bulk dispensing system to a household cleaning appliance with a bulk dispensing system. The described embodiment relates to washing machines. In the described embodiment, a dispenser housing is provided in the cabinet of the washing machine. A drawer is slidably received within the dispenser housing. The drawer has several so-called dispensing cups, designed for "single use dispensing" of treating chemistry, such as laundry detergent and fabric softener, bleach and the like. The disclosed method describes how such a washing machine can be retrofitted with a so-called bulk dispensing cartridge of laundry detergent in order to enable the washing machine to operate according to a so-called bulk dispensing system. For this purpose, the bulk dispensing cartridge is placed in one of the dispensing cups. It is also said that the remaining dispensing cups not holding the bulk dispensing cartridge but other treating chemistries, such as the ones previously mentioned, may be used in their "normal single use dispenser fashion".

### SUMMARY

Therefore, it is an aspect of one or more embodiments to provide a washing machine with a detergent supply device which supplies detergents through an automatic detergent supply method and a manual detergent supply method.

It is another aspect of one or more embodiments to provide a washing machine with a detergent supply device which prevents malfunction of valves generated when a liquid detergent remaining on the valves is dried and solidified.

Additional aspects of one or more embodiments will be set forth in part in the description which follows and, in part, will be apparent from the description, or may be learned by practice.

In accordance with an aspect of one or more embodiments, a washing machine includes a main body including a main body frame, a control panel including a manual supply selection button, a tub disposed within the main body to contain water, a drum rotatably installed within the tub, and a detergent supply device to supply detergents together with water to the tub, wherein the detergent supply device includes a detergent housing installed within the main body, a housing cover installed to cover the upper portion of the detergent housing and a
detergent accommodation box movably installed within the detergent housing, and the detergent accommodation box is divided into automatic detergent accommodation parts and manual detergent accommodation parts to accommodate a detergent to be discharged by flowing of water supplied to the manual detergent accommodation part, and the detergent supply device selectively supplies the detergents through one of an automatic detergent supply method and a manual detergent supply method, wherein the manual supply selection button is configured to select one of the detergent supply methods. The detergent supply device further includes a manual water supply guide fixed to the lower surface of the housing cover to supply water to the manual detergent accommodation parts. The washing machine is characterized in that the automatic detergent accommodation part is configured to accommodate a detergent to be discharged through a valve unit disposal at the side of the automatic detergent accommodation part and the detergent supply device selectively supplies said detergent through the automatic detergent supply method by means of operating the valve unit, the detergent supply device further comprises an automatic water supply guide configured to guide water to the lower portion of the detergent accommodation box retracted into the detergent housing, wherein water supply valves are controlled so as to supply water only to the automatic water supply guide if the manual supply selection button is not selected and the detergent housing is installed within the main body frame by fixing a coupling part integrally extended from a rear surface of the detergent housing to the rear end of the main body frame through a fastening member.

The automatic detergent accommodation parts may accommodate a liquid detergent and include detergent discharge parts provided with detergent discharge holes to discharge the detergent, and the detergent supply device may further include valve units disposed at the detergent discharge parts and valve drive devices to operate the valve units.

The automatic detergent accommodation parts may include a main detergent accommodation part to accommodate a liquid main detergent and a rinse accommodation part to accommodate a fabric rinse.

Each of the valve drive devices may include a cam having a fan-shaped cross section and rotated to operate each of the valve units and a detergent supply motor to rotate the cam.

Each of the valve units may include a valve ascending and descending according to rotation of the cam, an ascending/descending guide supporting the valve to ascend and descend the valve, and a valve cap installed at each of the detergent discharge parts to install the ascending/descending guide on each of the detergent discharge parts.

The ascending/descending guide may include a guide hole in which the valve is installed to be capable of ascending and descending, a first valve hole provided adjacent to the guide hole and opened and closed by the valve, and a temporary storage space installed within the ascending/descending guide to temporarily accommodate the liquid detergent, the valve cap may include a second valve hole to discharge the detergent within the temporary storage space to the inside of the detergent housing, and the valve may include a valve shaft installed within the guide hole to be capable of ascending and descending, a first valve part disposed above the Each of the valve units may include an elastic member provided with one end supported by the ascending/descending guide and the other end supported by the second valve part, and elastically supporting the valve in the downward direction.

The ascending/descending guide may include a support rib extended in the radial direction and inserted into a gap between the lower end of each of the detergent discharge parts and the valve cap.

The cam may support the lower surface of the second valve part and rotated to ascend and descend the valve.

The automatic water supply guide may guide water to the lower portions of the valve units, and spray holes to spray water toward the lower portions of the valve units and the cams may be provided at the front end of the automatic water supply guide disposed below the valve units.

The detergent supply device may further include an accommodation part cover covering the main detergent accommodation part and the rinse accommodation part and provided with a main detergent inlet and a rinse inlet formed at the front end thereof so that the main detergent and the fabric rinse are put into the main detergent accommodation part and the rinse accommodation part through the main detergent inlet and the rinse inlet, and a rotating cover rotatably installed on the accommodation part cover and rotated to open and close the main detergent inlet and the rinse inlet.

The accommodation part cover and the rotating cover may be made of a transparent material.

The detergent accommodation box may include a front cover forming the front surface thereof, and a tray installed at the rear of the front cover and provided with the main detergent accommodation part and the rinse accommodation part, the front cover may include display windows enabling a user to observe the heights of the main detergent and the fabric rinse accommodated in the main detergent accommodation part and the rinse accommodation part, and the tray may include transmission parts provided at positions corresponding to the display windows, and detergent guide grooves provided on the lower surfaces of the main detergent accommodation part and the rinse accommodation part, provided with lower surfaces extended to have heights corresponding to the lowest portions of the lower surfaces of the main detergent accommodation part and the rinse accommodation part, and connected to the lower portions of the transmission parts.

The tray may be formed of a transparent material.

The manual detergent accommodation parts may include a powdery detergent accommodation part to accommodate a powdery detergent and a bleach accommodation part to accommodate a bleach.

The detergent supply device may include a housing cover installed to cover the upper surface of the detergent housing and the manual water supply guide fixed to the lower surface of the housing cover to supply water to the manual detergent accommodation parts, and the inside of the manual detergent accommodation parts may be divided into a powdery detergent water supply channel to supply water to the powdery detergent accommodation part and a bleach water supply channel to supply water to the bleach accommodation part.

The detergent supply device may further include an accommodation part cover covering the automatic detergent accommodation parts, the accommodation cover may include a powdery detergent inlet to inject the powdery detergent into the powdery detergent accommodation part therethrough and a bleach inlet to inject the bleach into the bleach accommodation part therethrough, and water supply holes may be provided on the lower surfaces of the powdery detergent water supply channel and the bleach water supply channel at positions corresponding to the powdery detergent inlet and the bleach inlet.

The accommodation part cover may further include an inclined guide which is downward inclined toward the bleach inlet and formed adjacent to the bleach inlet.

The washing machine may further include a manual supply selection button to select one of the detergent supply methods.

The washing machine may further include an additional detergent button to additionally inject the detergent.

In accordance with another aspect of one or more embodiments, a washing machine includes a main body, a tub disposed within the main body to contain water, a drum rotatably installed within the tub, and a detergent supply device to supply detergents together with water to the tub, wherein the detergent supply device includes a detergent housing installed within the main body, a detergent accommodation box accommodating an amount of a liquid detergent required to execute washing plural times and provided with detergent discharge holes to discharge the detergent, valve units disposed at the detergent discharge holes to restrictedly discharge a portion of the liquid detergent accommodated in the detergent accommodation box through the detergent discharge holes, and valve drive devices to operate the valve units.

### BRIEF DESCRIPTION OF THE DRAWINGS

These and/or other aspects of one or more embodiments will become apparent and more readily appreciated from the following description of embodiments, taken in conjunction with the accompanying drawings of which:
FIG. 1 is a schematic view of a washing machine in accordance with an embodiment;
FIG. 2 is an exploded perspective view illustrating an installed state of a detergent supply device applied to the washing machine in accordance with an embodiment;
FIG. 3 is an enlarged view of the portion 'A' of FIG. 2;
FIG. 4 is an exploded perspective view illustrating a detergent accommodation box and an accommodation part cover applied to the washing machine in accordance with an embodiment;
FIG. 5 is a plain view of the detergent accommodation box applied to the washing machine in accordance with an embodiment;
FIG. 6 is an exploded perspective view illustrating a detergent housing and a housing cover applied to the washing machine in accordance with an embodiment;
FIG. 7 is a perspective view illustrating a valve unit and a valve drive device applied to the washing machine in accordance with an embodiment;
FIG. 8 is an exploded perspective view illustrating the valve unit and the valve drive device applied to the washing machine in accordance with an embodiment;
FIGS. 9 to 11 are sectional views illustrating operation of the valve unit and the valve drive device applied to the washing machine in accordance with an embodiment;
FIG. 12 is an exploded perspective view of a detergent supply device applied to a washing machine in accordance with another embodiment; and
FIG. 13 is a schematic view of a washing machine in accordance with another embodiment.

### DETAILED DESCRIPTION

Reference will now be made in detail to embodiments, examples of which are illustrated in the accompanying drawings, wherein like reference numerals refer to like elements throughout.

Hereinafter, a washing machine in accordance with an embodiment will be described with reference to the accompanying drawings.

In an embodiment, a drum washing which washes laundry using a difference in elevation will be exemplarily described.

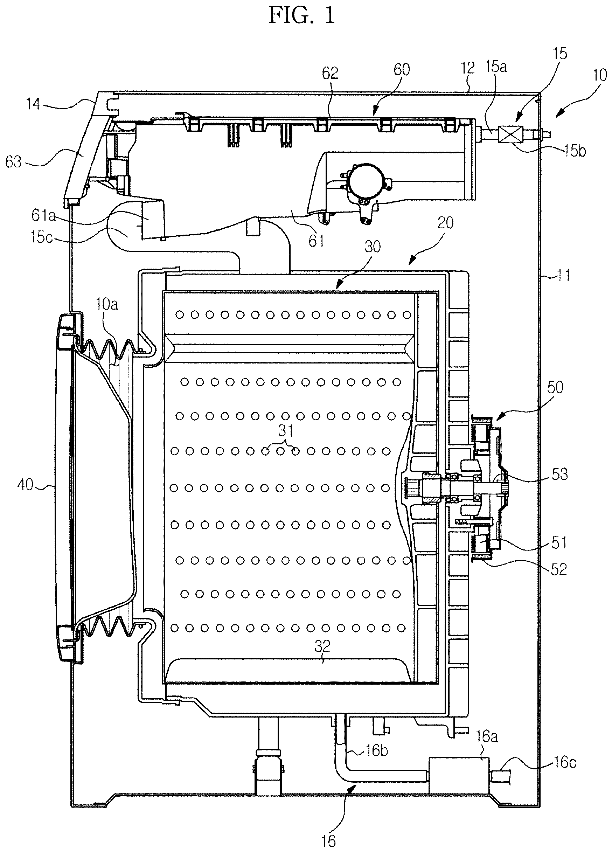

As shown in FIG. 1, the washing machine in accordance with an includes a main body 10 forming the external appearance of the washing machine, a tub 20 suspended within the main body 10 to contain water, a drum 30 rotatably installed within the tub 20, a door 40 to open and close a laundry inlet 10a provided to put laundry into the drum 30 therethrough, and a drum drive motor 50 installed on the rear surface of the tub 20 and generating rotary force to rotate the drum 30.

Therefore, the laundry within the drum 30 is raised upward and then fallen downward and is thus washed using a difference in elevation by rotating the drum 30 by the drum drive motor 50 under the condition that the laundry is put into the drum 30 through the inlet 10a by opening the door 40.

Communication holes 31 through which water within the tub 20 is introduced into the drum 30 are provided on the drum 30, and lifters 32 to raise the laundry upward are arranged on the inner surface of the drum 30.

The main body 10 includes a main body frame 11 forming front, rear and both side surfaces of the main body 10, a cover frame 12 covering the upper portion of the main body frame 11, and a support bar 13 provided with one end fixed to the upper end of the front surface of the main body frame 11 and the other end fixed to the upper end of the rear surface of the main body frame 11 to support the lower surface of the cover frame 12. Further, a control panel 14 enabling a user to select operation of the washing machine is arranged at the upper portion of the front surface of the main body 10.

A water supply device 15 to supply water to the tub 20 and a detergent supply device 60 to mix the water supplied by the water supply device 15 with a detergent and then to supply the water containing the detergent to the tub 20 are disposed at the upper portion of the inside of the main body 10. The water supply device 15 includes water supply pipes 15a connected to an external water supply source, water supply valves 15b to respectively open and close the water supply pipes 15a, and a water supply hose 15c connecting the detergent supply device 60 to the tub 20 to guide the water and the detergent to the tub 20.

A drain device 16 to discharge water used for washing to the outside after washing of the laundry has been completed is disposed under the tub 20. The drain device 16 includes a drain pump 16a to discharge water within the tub 20, a drain pipe 16b connecting the tub 20 and the drain pump 16a to each other, and a drain hose 16c provided within one end connected to the drain pump 16a and the other end extended to the outside of the main body 10.

The drum drive motor 50 includes a stator 51 installed on the tub 20, a rotor 52 rotating while interacting with the stator 51, and a rotary shaft 53 provided with one end installed at the rotor 52 and the other end passing through the rear surface of the tub 20 and installed at the drum 30 to rotate the drum 30 together with the rotor 52.

The detergent supply device 60 may supply detergents through an automatic detergent supply method and a manual detergent supply method according to user's selection, and the automatic detergent supply method is configured to additionally inject a detergent according to user's need.

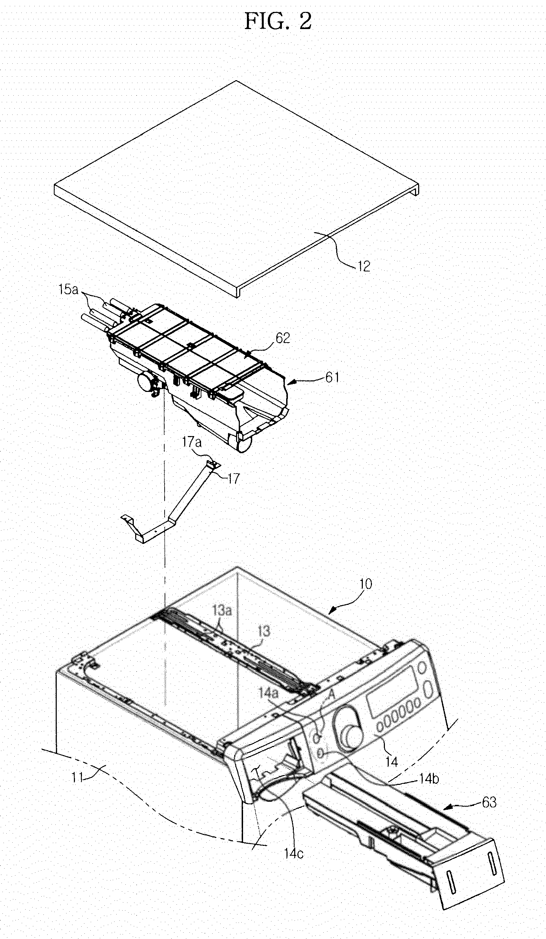

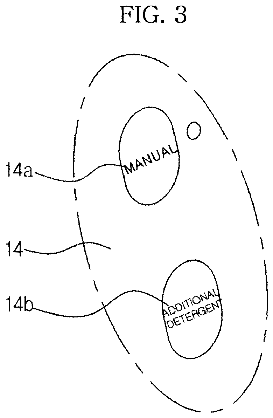

In order to enable a user to select one of the above detergent supply methods and detergent additional injection, as described above, the control panel 14 includes a manual supply selection button 14a to select one of the detergent supply methods and an additional detergent button 14b to additionally inject the detergent, as shown in FIGS. 2 and 3. Therefore, the user may select one of the detergent supply methods through the manual supply selection button 14a and additionally inject the detergent through the additional detergent button 14b.

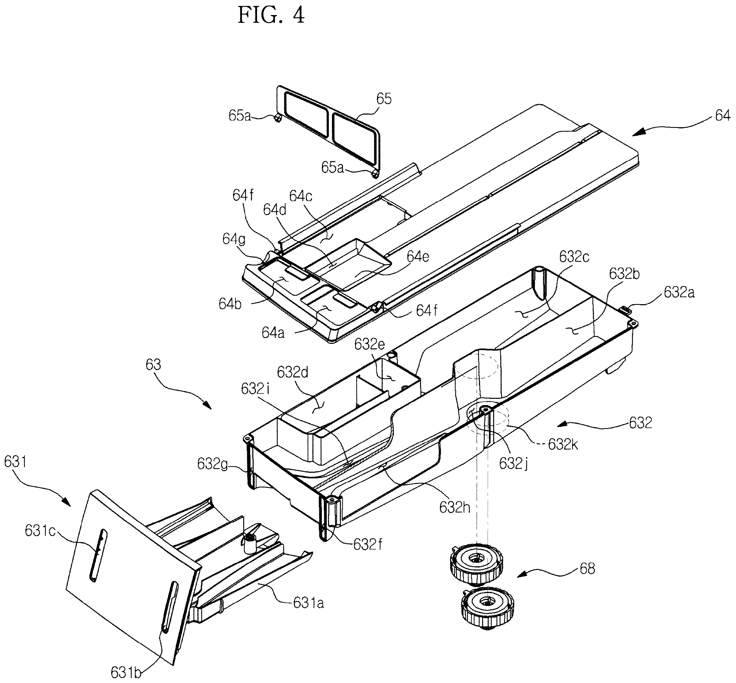

The detergent supply device 60, as shown in FIGS. 4 to 6, includes a detergent housing 61 installed within the main body 10, a housing cover 62 installed to cover the upper portion of the detergent housing 61, a detergent accommodation box 63 movably installed within a space formed by the detergent housing 61 and the housing cover 62 to contain detergents therein, an accommodation part cover 64 covering the detergent accommodation box 63 to prevent the detergents within the detergent accommodation box 63 from overflowing during transfer of the detergent accommodation box 63, and water supply guides 66 and 67 to mix water with the detergents.

The detergent housing 61 is provided with an accommodation space 61a in which the detergent accommodation box 63 is accommodated, and is fixed within the main body 10 such that the front surface and the upper surface of the detergent housing 61 are opened to install the detergent accommodation box 63 and the water supply guides 66 and 67. A connection part 61b connected to the water supply hose 15c to supply the detergent and water to the tub 20 is provided at the lower portion of the front surface of the detergent housing 61. The front end of the detergent housing 61 is fixed to one side of the control panel 14 disposed at the upper portion of the front surface of the main body 10. An opening 14c through which the detergent accommodation box 63 is retracted into and extracted from the detergent housing 61 is provided at one side of the control panel 14.

A sensor 70 to detect whether or not the detergent accommodation box 63 is completely retracted into the detergent housing 61 is disposed at the rear surface of the detergent housing 61, and a sensing part 632a disposed on the sensor 70 when the detergent accommodation box 63 is completely retracted into the detergent housing 61 is formed at the rear end of the detergent accommodation box 63. The sensor 70 may be a magnet sensor which senses a magnetic field, and a magnet is disposed in the sensing part 632a.

In order to prevent the rear end of the detergent supply device 60 from sagging due to its own weight, a support member 17 to support the rear end of the detergent housing 61 is installed on the main body 10. The support member 17 is provided with one end installed on the support bar 13 and the other end fixed to the upper end of one side of the main body frame 11, and the middle portion of the support member 17 is bent downward to support the lower surface of the detergent housing 61 so that the lower surface of the rear portion of the detergent housing 61 is supported by the upper surface of the support member 17.

Reinforcing ribs 13a to reinforce the support bar 13 protrude upward from both sides of the support bar 13, and a hanging part 17a bent upward to be hang on the reinforcing rib 13a is provided at one end of the support member 17 installed on the support bar 13. Therefore, the end of the support member 17 is fixed to the support bar 13 through a screw under the condition that the hanging part 17a is hang on the reinforcing rib 13a, and the other end of the support member 17 is fixed to the upper end of the side surface of the main body frame 11 through a screw.

The housing cover 62 is installed to cover the upper portion of the detergent housing 61 through a snap-fit connection method. For this purpose, a plurality of hooks 62a is provided at the edge of the housing cover 62, and a protruding part 61c which protrudes outward is provided along the upper end of the detergent housing 61.

The detergent accommodation box 63 includes a front cover 631 forming a portion of the front surface of the washing machine, and a tray 632 installed at the rear of the front cover 631 to be movable within the accommodation space 61a of the detergent housing 61 and provided with detergent accommodation parts 632b, 632c, 632d and 632e in which detergents to be supplied are respectively stored. The tray 632 is formed of a transparent material to enable a user to easily observe the inside of the tray 632, and the inside of the tray 632 is divided into automatic detergent accommodation parts 632b and 632c in which a detergent to be automatically supplied is accommodated and manual detergent accommodation parts 632d and 632e in which a detergent to be manually supplied is accommodated.

The automatic detergent accommodation parts 632b and 632c include a main detergent accommodation part 632b to automatically supply a liquid main detergent and a rinse accommodation part 632c to automatically supply a liquid fabric rinse, and the manual detergent accommodation parts 632d and 632e include a powdery detergent accommodation part 632d to supply a powdery detergent and a bleach accommodation part 632e to supply a bleach.

Here, a large amount of the main detergent and a large amount of the fabric rinse are injected into the main detergent accommodation part 632b and the rinse accommodation part 632c of the automatic detergent accommodation parts 632b and 632c so as to execute washing plural times, and are partially used whenever washing of the laundry is carried out. When the automatic detergent accommodation parts 632b and 632c are provided, washing of laundry is repeated until the detergent and the fabric rinse accommodated in the main detergent accommodation part 632b and the rinse accommodation part 632c are exhausted without injection of the main detergent or the fabric rinse whenever washing of laundry is carried out, and thus use of the washing machine is convenient.

For this purpose, the main detergent accommodation part 632b accommodates 1.9l of the liquid detergent in the case of a large-size washing machine and accommodates 1.5 liter of the liquid detergent in the case of a medium/small-size washing machine, and the rinse accommodation part 632 accommodates 1.5 liter of the fabric rinse in the case of a large-size washing machine and accommodates 0.5 liter of the fabric rinse in the case of a medium/small-size washing machine.

The front cover 631 includes a bracket part 631a extended rearward from the rear surface thereof. The bracket part 631a is connected to the front portion of the lower surface of the tray 632 and disperses force, applied to the front cover 631 when the detergent accommodation box 63 is extracted or retracted, throughout the tray 632.

Further, display windows 631b and 631c are provided at both sides of the front surface of the front cover 631, thereby enabling the user to check the heights of the main detergent and the fabric rinse respectively accommodated in the main detergent accommodation part 632b and the rinse accommodation part 632c through the display windows 631b and 631c. The two display windows 631b and 631c include a main detergent display window 631b to display the height of the main detergent and a rinse display window 631c to display the height of the fabric rinse.

Transmission parts 632f and 632g extended vertically and connected to the rear portions of the display windows 631b and 631c to display the heights of the main detergent and the rinse contained in the main detergent accommodation part 632b and the rinse accommodation part 632c are provided on the front surface of the tray 632. The tray 632 is formed of a transparent material, and thus the transmission parts 632f and 632g are formed of the transparent material. Therefore, a user located in front of the front cover 631 may observe the heights of the main detergent and the fabric rinse contained in the tray 632 through the display windows 631b and 631c and the transmission parts 632f and 632g.

The lower surface of the front portion of the tray 632 is downward inclined toward detergent discharge parts 632k, which will be described later, to guide the main detergent and the fabric rinse to the detergent discharge parts 632k. That is, a region of the lower surface of the tray 632 located in front of the detergent discharge parts 632k is downward inclined backwardly toward the detergent discharge parts 632k, and a region of the lower surface of the tray 632 located at the rear of the detergent discharge parts 632k is downward inclined forwardly toward the detergent discharge parts 632k. Here, when the region of the lower surface of the tray 632 located in front of the detergent discharge parts 632k is downward inclined backwardly toward the detergent discharge parts 632k, as describe above, movement of water supplied to the detergent housing 61 toward the front cover 631 along the lower surface of the tray 632 is prevented.

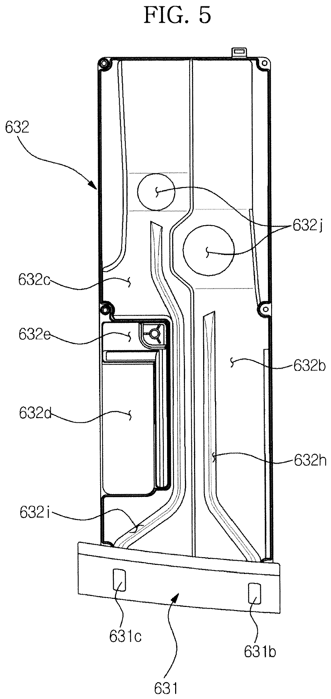

Since the lower surface of the front portion of the tray 632 is downward inclined backwardly toward the detergent discharge parts 632k, as describe above, two detergent guide grooves 632h and 632i respectively connected to the lower portions of the two transmission parts 632f and 632g are provided on the lower surfaces of the main detergent accommodation part 632b and the rinse accommodation part 632c of the tray 632, as shown in FIG. 5. The lower surfaces of the detergent guide grooves 632h and 632i are extended to have heights corresponding to the lowest portions of the inner lower surfaces of the main detergent accommodation part 632b and the rinse accommodation part 632c, thereby enabling the heights of the liquid detergent and the fabric rinse contained in the tray 632 to be precisely displayed through the display windows 631b and 631c.

The accommodation part cover 64 is formed of a transparent material to allow a user to easily observe the detergents contained in the tray 63, and covers the upper portions of the main detergent accommodation part 632b and the rinse accommodation part 632c to accommodate the liquid detergent and the fabric rinse to prevent the liquid main detergent and fabric rinse from being dried. Further, the accommodation part cover 64 serves to prevent the liquid detergent and fabric rinse from overflowing the tray 632 during transfer of the detergent accommodation box 63.

A main detergent inlet 64a and a rinse inlet 64b through which the liquid main detergent and the fabric rinse are injected into the main detergent accommodation part 632b and the rinse accommodation part 632c are provided in parallel at the front end of the accommodation part cover 64, and a rotating cover 65 to open and close the main detergent inlet 64a and the rinse inlet 64b is installed on the accommodation part cover 64. The rotating cover 65 is formed of a transparent material in the same manner as the accommodation part cover 64, and hinge parts 65a provided at both sides of the rotating cover 65 are rotatably connected to hinge protrusions 64f provided at both sides of the accommodation part cover 64 so that the rotating cover 65 is rotated to simultaneously open and close the main detergent inlet 64a and the rinse inlet 64b. A recess 64g to allow a user to easily apply force to the rotating cover 65 to rotate the rotating cover 65 is provided at one side of the rinse inlet 64b of the tray 632.

Further, a powdery detergent inlet 64c through which the powdery detergent is injected into the powdery detergent accommodation part 632d and a bleach inlet 64d through which the bleach is injected into the bleach accommodation part 632e are provided on the accommodation part cover 64 at the rear of the rinse inlet 64b. Since the bleach inlet 64d has a very small width in terms of the arrangement structure of the detergent accommodation parts 632b, 632c, 632d and 632e, an inclined guide 64e which is downward inclined toward the bleach inlet 64d is formed adjacent to the bleach inlet 64d of the accommodation part cover 64.

In order to supply the liquid main detergent and fabric rinse accommodated in the main detergent accommodation part 632b and the rinse accommodation part 632c to the tub 20, the detergent discharge parts 632k extended into a hollow cylindrical shape to form detergent discharge holes 632j are respectively provided on the lower surfaces of the main detergent accommodation part 632b and the rinse accommodation part 632c, and the detergent supply device 60 includes two valve units 68 to selectively discharge the liquid main detergent and fabric rinse through the two detergent discharge holes 632j and two valve drive devices 69 to independently operate the two valve units 68.

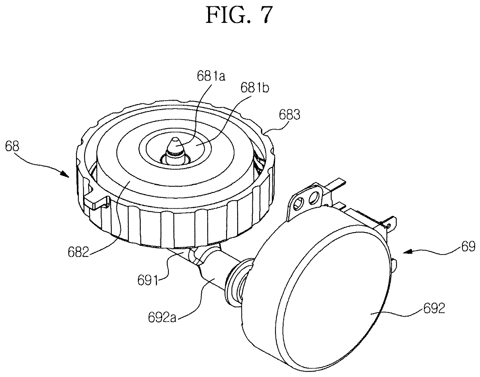

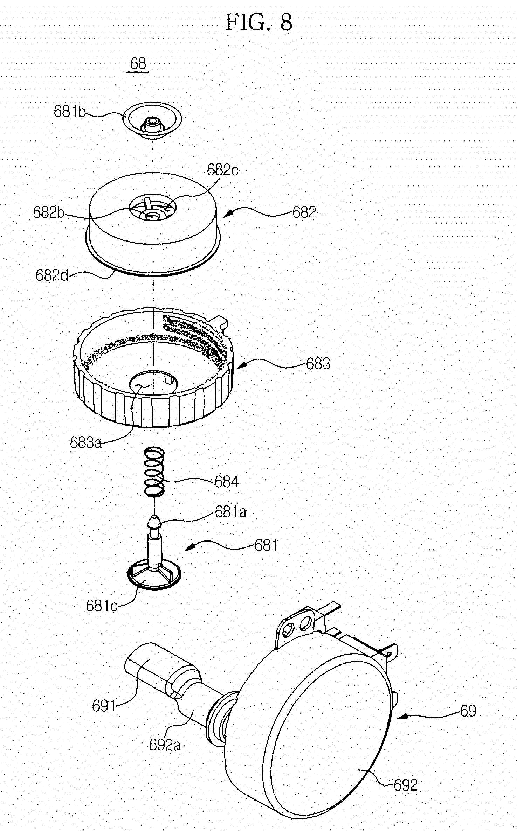

The valve unit 68, as shown FIGS. 7 and 8, includes a valve 681 ascending and descending to open and close the detergent discharge part 632k, an ascending/descending guide 682 to guide ascending and descending of the valve 681, a valve cap 683 to install the ascending/descending guide 682 on the detergent discharge part 632k, and an elastic member 684 to elastically support the valve 681.

The ascending/descending guide 682 is formed in a hollow cylindrical shape and is provided with a temporary storage space 682a to temporarily accommodate the liquid main detergent or fabric rinse, and a guide hole 682b in which the valve 681 is installed to be capable of ascending and descending, and a first valve hole 682c located adjacent to the guide hole 682b to pass the liquid main detergent or fabric rinse. Further, a support rib 682d protruding in the radial direction is provided on the outer circumferential surface of the lower end of the ascending/descending guide 682, and is inserted into a gap between the lower end of the detergent discharge part 632k and the inner surface of the valve cap 683 during a process of coupling the valve cap 683 with the detergent discharge part 632k, thereby maintaining a state in which the ascending/descending guide 682 is installed on the detergent discharge part 632k.

The valve cap 683 includes a second valve hole 683a to discharge the detergent temporarily stored in the temporary storage space 682a of the ascending/descending guide 682 to the inside of the detergent housing 61, and is connected to the detergent discharge part 632k of the tray 632 through a screw connection method.

The valve 681 includes a valve shaft 681a installed within the guide hole 682b to be capable of ascending and descending, a first valve part 681b formed of an elastically deformable material, such as rubber, and disposed above the valve shaft 681a to open and close the first valve hole 682c according to ascending and descending of the valve 681, and a second valve part 681c formed integrally with the lower end of the valve shaft 681a to open and close the second valve hole 683a according to ascending and descending of the valve 681. The lower surface of the second valve part 681c is supported by a cam 691 which will be described later so that the valve 681 ascends and descends by force transmitted from the cam 691 through the second valve part 681c. As the valve 681 ascends, the first valve hole 682c is opened and the second valve hole 683a is closed, and as the valve 681 descends, the first valve hole 682 is closed and the second valve hole 683a is opened.

The elastic member 684 is provided with one end supported by the lower surface of a portion of the ascending/descending guide 682 adjacent to the guide hole 682b and the other end supported by the upper surface of the second valve part 681c, and elastically supports the valve 681 in the downward direction.

The two valve drive devices 69 are installed at both sides of the detergent housing 61, and each of the two valve drive devices 69 includes the cam 691 rotated to ascend and descend the valve 681 and a detergent supply motor 692 to rotate the cam 691.

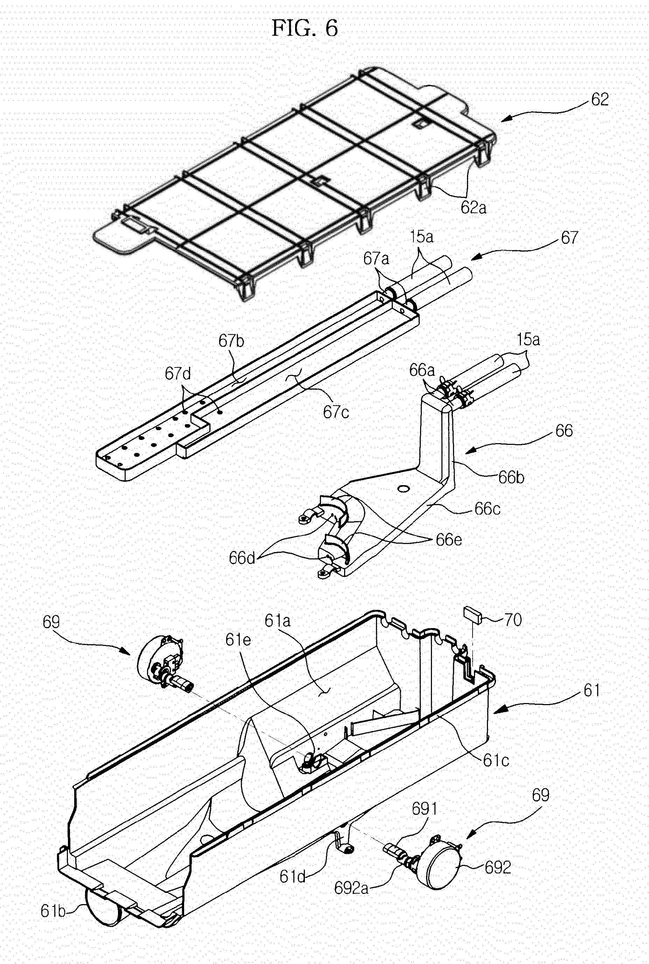

The cam 691 has a fan-shaped cross section and is rotated by the detergent supply motor 692 to ascend and descent the valve 681 based on the rotating angel thereof. The cam 691, as shown in FIG. 6, is disposed under the valve 681 of the detergent accommodation box 63 retracted into the detergent housing 61 within the detergent housing 61, and applies force to the valve 681 through the lower end of the valve 681, i.e., the lower surface of the second valve part 681c.

The detergent supply motor 692 is installed at each of motor installation parts 61d provided at both sides of the lower portion of the detergent housing 61, and a rotary shaft 692a of the detergent supply motor 692 is connected to the cam 691 disposed within the detergent housing 61 through a shaft installation hole 61e provided on the detergent housing 61 and transmits rotary force to the cam 691.

The water supply guides 66 and 67 include an automatic water supply guide 66 connected to the water supply pipes 15a and disposed under the detergent accommodation box 63 retracted into the detergent housing 61, and a manual water supply guide 67 installed on the lower surface of the housing cover 62 and disposed on the accommodation part cover 64 to supply water to the powdery detergent accommodation part 632d and the bleach accommodation part 632e of the manual detergent accommodation parts 632d and 632e.

The automatic water supply guide 66 is configured to guide water to the lower portion of the detergent accommodation box 63 retracted into the detergent housing 61 and to spray water toward the lower ends of the valve units 68 disposed under the detergent accommodation box 63. The automatic water supply guide 66 includes automatic water supply ports 66a provided at the rear end thereof and connected to the water supply pipes 15a, an extension part 66b extended downward to guide water in the downward direction, and a spray part 66c extended forward from the lower end of the extension part 66b and provided with spray holes 66d formed at the front end thereof to spray water toward the lower ends of the valve units 68. Shields 66e disposed in an arc shape around the valve caps 683 to prevent water from being splashed backward are formed on the upper surface of the spray part 66c.

The manual water supply guide 67 includes manual water supply ports 67a provided at the rear end thereof and connected to the water supply pipes 15a, and a powdery detergent water supply channel 67b and a bleach water supply channel 67c, upper surfaces of which are opened. The manual water supply guide 67 is fixed to the lower surface of the housing cover 62 through heat fusion, etc., and thus the upper surfaces of the powdery detergent water supply channel 67b and the bleach water supply channel 67c are closed. Water supply holes 67d to supply water to powdery detergent accommodation part 632d and the bleach accommodation part 632e through the lower surface of the manual water supply guide 67 are provided on the lower surface of the manual water supply guide 67 at positions corresponding to the powdery detergent accommodation part 632d and the bleach accommodation part 632e.

Hereinafter, operation of the above-described detergent supply device of the washing machine will be described with reference to the accompanying drawings.

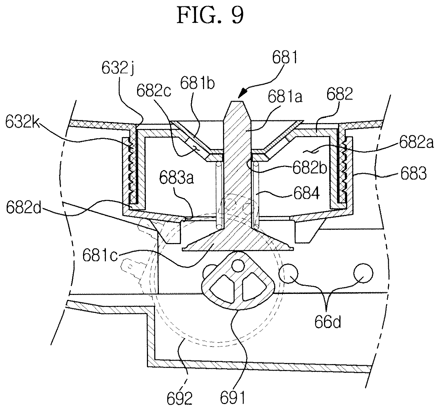

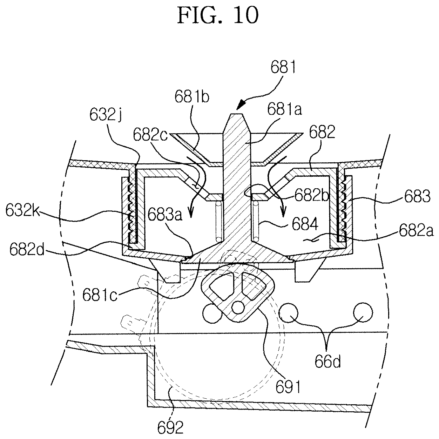

When the cam 691 is rotated by the detergent supply motor 692 under the condition that the first valve hole 682c is closed by the first valve part 681b, as shown in FIG. 9, the valve 681 ascends by the cam 691, as shown in FIG. 10. As the valve 681 ascends, the first valve hole 682c having being closed by the first valve part 681b is opened and the second valve hole 683a is closed by the second valve part 681c. Therefore, a portion of the main detergent or the fabric rinse accommodated in the main detergent accommodation part 632b or the rinse accommodation part 632c is introduced into the temporary storage space 682a provided within the ascending/descending guide 682 through the first valve hole 682c.

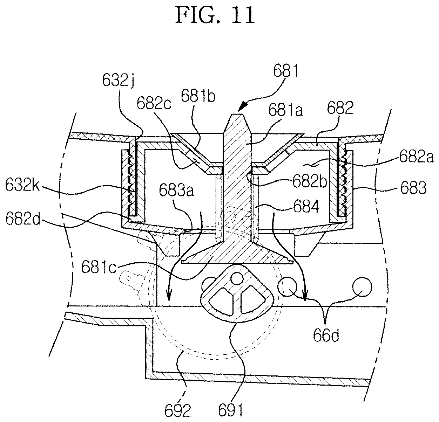

When the cam 691 is rotated again by the detergent supply motor 692 after a designated time has elapsed and then a designated amount of the detergent fills the temporary storage space 682a of the ascending/descending guide 682, the valve 681 having ascent by the cam 691 descends by elastically restoring force of the elastic member 684, as shown in FIG. 11. As the valve 681 descends, the first valve hole 682c is closed by the first valve part 681b and the second valve hole 683a having been closed by the second valve part 681c is opened. Therefore, the detergent filling the temporary storage space 682a of the ascending/descending guide 682 is transmitted to the inside of the detergent housing 61 through the second valve hole 683a.

During the above process of discharging the detergent to the inside of the detergent housing 61 through the second valve hole 683a, the spray holes 66d of the automatic water supply guide 66 spray water. The sprayed water is mixed with the detergent discharged through the second valve hole 683a, and is then supplied to the tub 20 through the water supply hose 15c connected to the detergent housing 61.

Since the spray holes 66d are configured to spray water toward the second valve part 681c of the valve 681, the second valve hole 683a and the cam 691, the second valve part 681c, the second valve hole 683a and the cam 691 are washed by the water sprayed from the spray holes 66d, and thus remaining of the detergent on the second valve part 681c, the second valve hole 683a and the cam 691 is prevented. Therefore, malfunction of the valves 681, generated if the liquid main detergent or fabric rinse remaining on the second valve parts 681c, the second valve holes 683a and the cams 691 is solidified, may be prevented.

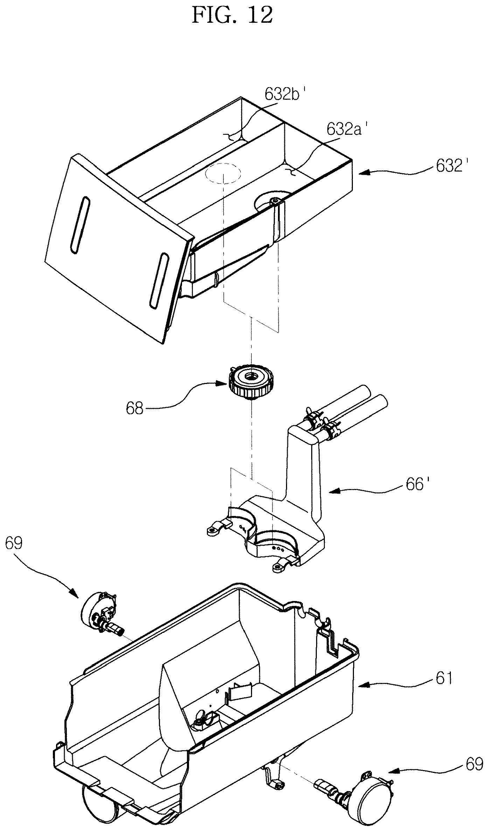

Although an embodiment illustrates the tray 632 as being divided into the main detergent accommodation part 632b, the rinse accommodation part 632c, the powdery detergent accommodation part 632d and the bleach accommodation part 632e to supply the main detergent and the fabric rinse through the automatic detergent supply method and to supply the powdery detergent and the bleach in the manual detergent supply method, the tray is not limited thereto. In accordance with another embodiment, as shown in FIG. 12, the tray 632' may include only a main detergent accommodation part 632a' and a rinse accommodation part 632b' without components corresponding to the powdery detergent accommodation part and the bleach detergent accommodation part, and the detergent supply device 60 includes a pair of valve units 68, a pair of valve drive device 69 and a water supply guide 66' to supply only a main detergent and a fabric rinse through the automatic detergent supply method.

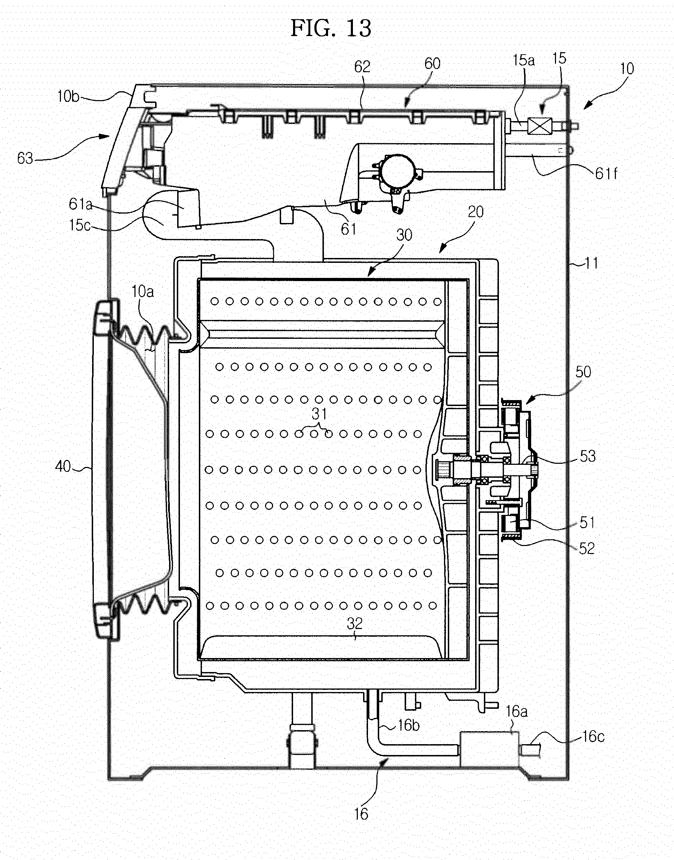

Further, although an embodiment illustrates the rear end of the detergent housing 61 as being supported by the main body frame 11 through the support bar 13 and the support member 17, the detergent housing 61 is not limited thereto. As shown in FIG. 13, the detergent housing 61 may be installed within the main body frame 11 by fixing a coupling part 61f integrally extended from the rear surface of the detergent housing 61 to the rear end of the main body frame 11 through a fastening member, such as a screw.

Hereinafter, operation of the detergent supply device of the above-described washing machine will be described.

First, in order to use a liquid main detergent, a user operates the control panel 14 to execute washing under the condition that the manual supply selection button 14a is not selected. Thereby, the water supply valves 15b are controlled so as to supply water only to the automatic water supply guide 66, and the detergent supply motors 692 are driven to rotate the cams 691. Then, water is sprayed through the spray holes 66d provided at the front end of the automatic water supply guide 66 and a portion of the main detergent accommodated in the main detergent accommodation part 632b is discharged through the second valve hole 683a, simultaneously. The water and the main detergent are mixed within the detergent housing 61, and are then supplied to the tub 20 through the water supply hose 15c.

On the other hand, in order to use a powdery detergent, the user extracts the detergent accommodation box 63 from the detergent housing 61, puts the powdery detergent into the powdery detergent accommodation part 632d through the powdery detergent inlet 64c, and then retracts the detergent accommodation box 63 into the detergent housing 61.

When the user selects the manual supply selection button 14a in the above state and operates the control panel 14 to execute washing, the water supply valves 15b are controlled so as to supply water only to the powdery detergent water supply channel 67b of the manual water supply guide 67. Therefore, water is supplied to the powdery detergent accommodation part 632d through the water supply holes 67d provided on the manual water supply guide 67 and the powdery detergent inlet 64c, is mixed with the powdery detergent accommodated within the powdery detergent accommodation part 632d, and is then supplied to the tub 20 through the water supply hose 15c.

As is apparent from the above description, a washing machine in accordance with an embodiment has a detergent supply device which supplies a detergent through an automatic detergent supply method or a manual detergent supply method according to user's section, thereby using various types of detergent.

Further, the washing machine removes a liquid detergent remaining on valves by spraying water toward the valves through an automatic water supply guide, thereby preventing malfunction of the valves generated when the liquid detergent remaining on valve units is dried and solidified.

## Claims

1. A washing machine comprising:
a main body (10) including a main body frame (11);
a control panel (14) including a manual supply selection button (14a);
a tub (20) disposed within the main body (10) to contain water;
a drum (30) rotatably installed within the tub (20); and
a detergent supply device (60) to supply detergents together with water to the tub (20), wherein:
the detergent supply device (60) includes a detergent housing (61) installed within the main body (10), a housing cover (62) installed to cover the upper portion of the detergent housing (61) and a detergent accommodation box (63) movably installed within the detergent housing (61); and
the detergent accommodation box (63) is divided into automatic detergent accommodation part (632b; 632c) and manual detergent accommodation part (632d; 632e) to accommodate a detergent to be discharged by flowing of water supplied to the manual detergent accommodation part (632d, 632e), and the detergent supply device (60) selectively supplies the detergents through one of an automatic detergent supply method and a manual detergent supply method, wherein the manual supply selection button (14a) is configured to select one of the detergent supply methods,
wherein the detergent supply device (60) further includes a manual water supply guide (67) fixed to the lower surface of the housing cover (62) to supply water to the manual detergent accommodation parts (632d, 632e),
**characterized in that**
the automatic detergent accommodation part (632b, 632c) is configured to accommodate a detergent to be discharged through a valve unit (68) disposed at a side of the automatic detergent accommodation part (632b, 632c) and the detergent supply device (60) selectively supplies said detergent through the automatic detergent supply method by means of operating the valve unit (68),
the detergent supply device (60) further comprises an automatic water supply guide (66) configured to guide water to the lower portion of the detergent accommodation box (63) retracted into the detergent housing (61), wherein water supply valves (15b) are controlled so as to supply water only to the automatic water supply guide (66) if the manual supply selection button (14a) is not selected, and
the detergent housing (61) is installed within the main body frame (11) by fixing a coupling part (61f) integrally extended from a rear surface of the detergent housing (61) to the rear end of the main body frame (11) through a fastening member.

2. The washing machine according to claim 1, wherein:
the automatic detergent accommodation part (632b; 632c) accommodate a liquid detergent and include detergent discharge part (632k) provided with detergent discharge hole (632j) to discharge the detergent;
the detergent supply device (60) further includes valve unit (68) disposed at the detergent discharge part (632k) and valve drive device (69) to operate the valve unit (68).

3. The washing machine according to claim 1, wherein the automatic detergent accommodation part (632b; 632c) is divided into a main detergent accommodation part (632b) to accommodate a liquid main detergent and a rinse accommodation part (632c) to accommodate a fabric rinse.

4. The washing machine according to claim 2, wherein the valve drive device (69) includes a cam (691) having a fan-shaped cross section and rotated to operate the valve unit (68) and a detergent supply motor (692) to rotate the cam (691).

5. The washing machine according to claim 4, wherein the valve unit (68) includes a valve (681) ascending and descending according to rotation of the cam (691), an ascending/descending guide (682) supporting the valve (681) to ascend and descend the valve (681), and a valve cap (683) installed at the detergent discharge part (632k) to install the ascending/descending guide (682) on the detergent discharge part (632k).

6. The washing machine according to claim 5, wherein:
the ascending/descending guide (682) includes a guide hole (682b) in which the valve (681) is installed to be capable of ascending and descending, a first valve hole (682c) provided adjacent to the guide hole (682b) and opened and closed by the valve (681), and a temporary storage space (682a) installed within the ascending/descending guide (682) to temporarily accommodate the liquid detergent;
the valve cap (683) includes a second valve hole (683a) to discharge the detergent within the temporary storage space (682a) to the inside of the detergent housing (61); and
the valve (681) includes a valve shaft (681a) installed within the guide hole (682b) to be capable of ascending and descending, a first valve part (681b) disposed above the valve shaft (681a) to open and close the first valve hole (682c) according to ascending and descending of the valve (681), and a second valve part (681c) disposed under the valve shaft (681a) to open and close the second valve hole (683a).

7. The washing machine according to claim 6, wherein the valve unit (68) includes an elastic member (684) provided with one end supported by the ascending/descending guide (682) and the other end supported by the second valve part (681c), and elastically supporting the valve (681) in the downward direction.

8. The washing machine according to claim 5, wherein the ascending/descending guide (682) includes a support rib (682d) extended in the radial direction and inserted into a gap between the lower end of the detergent discharge part (632k) and the valve cap (683).

9. The washing machine according to claim 6, wherein the cam (691) supports a lower surface of the second valve part (681c) and is rotated to ascend and descend the valve (681).

10. The washing machine according to claim 4, wherein:
the automatic water supply guide (66) guides water to a lower portion of the valve unit (68); and
spray holes (66d) to spray water toward the lower portion of the valve unit (68) and the cam (691) is provided at the front end of the automatic water supply guide (66) disposed below the valve units (68).

11. The washing machine according to claim 3, wherein the detergent supply device (60) further includes:
an accommodation part cover (64) covering the main detergent accommodation part (632b) and the rinse accommodation part (632c) and provided with a main detergent inlet (64a) and a rinse inlet (64b) so that the main detergent and the fabric rinse are put into the main detergent accommodation part (632b) and the rinse accommodation part (632c) through the main detergent inlet (64a) and the rinse inlet (64b); and
a rotating cover (65) rotatably installed on the accommodation part cover (64) and rotated to open and close the main detergent inlet (64a) and the rinse inlet (64b).

12. The washing machine according to claim 3, wherein:
the detergent accommodation box (63) includes a front cover (631) forming the front surface thereof, and a tray (632) installed at the rear of the front cover (631) and provided with the main detergent accommodation part (632b) and the rinse accommodation part (632c); and
the front cover (631) includes indicators (631b, 631c) enabling a user to observe presence of the main detergent and the fabric rinse accommodated in the main detergent accommodation part (632b) and the rinse accommodation part (632c).

13. The washing machine according to one of the preceding claims, wherein the manual detergent accommodation part (632d; 632e) include a powdery detergent accommodation part (632d) to accommodate a powdery detergent and a bleach accommodation part (632e) to accommodate a bleach.

14. The washing machine according to claim 13, wherein:
the detergent supply device (60) includes a housing cover (62) installed to cover the upper surface of the detergent housing (61) and the manual water supply guide (67) fixed to the lower surface of the housing cover (62) to supply water to the manual detergent accommodation parts; and
the inside of the manual water supply guide (67) is divided into a powdery detergent water supply channel (67b) to supply water to the powdery detergent accommodation part (632d) and a bleach water supply channel (67c) to supply water to the bleach accommodation part (632e).

15. The washing machine according to claim 13, wherein:
the detergent supply device (60) further includes an accommodation part cover (64) covering the automatic detergent accommodation part (632b; 632c);
the accommodation cover (64) includes a powdery detergent inlet (64c) to inject the powdery detergent into the powdery detergent accommodation part (632d) therethrough and a bleach inlet (64d) to inject the bleach into the bleach accommodation part (632e) therethrough; and
water supply holes (67d) are provided on the lower surfaces of the powdery detergent water supply channel (67b) and the bleach water supply channel (67c) at positions corresponding to the powdery detergent inlet (64c) and the bleach inlet (64d).

16. The washing machine according to claim 15, wherein the accommodation part cover further includes an inclined guide (64e) which is downward inclined toward the bleach inlet (64d) and formed adjacent to the bleach inlet (64d).

## Patentansprüche

1. Waschmaschine, die umfasst:
einen Hauptkörper (10) mit einem Hauptkörperrahmen (11);
ein Bedienfeld (14) mit einer Auswahltaste für manuelle Zufuhr (14a);
einen Bottich (20), der in dem Hauptkörper (10) angeordnet ist, um Wasser zu enthalten;
eine Trommel (30), die drehbar in dem Bottich (20) installiert ist; und
eine Waschmittel-Zufuhrvorrichtung (60) zum Zuführen von Waschmittel zusammen mit Wasser in den Bottich (20), wobei:
die Waschmittel-Zufuhrvorrichtung (60) ein Waschmittelgehäuse (61) beinhaltet, das in dem Hauptkörper (10) installiert ist, eine Gehäuseabdeckung (62), die so installiert ist, dass sie den oberen Teil des Waschmittelgehäuses (61) abdeckt, und eine Waschmittel-Aufnahmekammer (63), die beweglich in dem Waschmittelgehäuse (61) installiert ist; und
die Waschmittel-Aufnahmekammer (63) in einen automatischen Waschmittel-Aufnahmeteil (632b; 632c) und einen manuellen Waschmittel-Aufnahmeteil (632d; 632e) aufgeteilt ist, um ein Waschmittel aufzunehmen, das durch einen Wasserstrom entladen wird, der zu dem manuellen Waschmittel-Aufnahmeteil (632d, 632e) geleitet wird, und die Waschmittel-Zufuhrvorrichtung (60) selektiv die Waschmittel durch eines aus einem automatischen Waschmittelzufuhrverfahren und einem manuellen Waschmittelzufuhrverfahren zuführt, wobei die Auswahltaste für manuelle Zufuhr (14a) dazu konfiguriert ist, eines aus den Waschmittelzufuhrverfahren auszuwählen,
wobei die Waschmittel-Zufuhrvorrichtung (60) des Weiteren eine manuelle Wasserzufuhrführung (67) beinhaltet, die an der Unterseite der Gehäuseabdeckung (62) befestigt ist, um Wasser zu den manuellen Waschmittel-Aufnahmeteilen (632d, 632e) zu leiten,
**dadurch gekennzeichnet, dass**
der automatische Waschmittel-Aufnahmeteil (632b, 632c) dazu konfiguriert ist, ein durch eine Ventileinheit (68) auszustoßendes Waschmittel aufzunehmen, die auf einer Seite des automatischen Waschmittel-Aufnahmeteils (632b, 632c) angeordnet ist, und die Waschmittel-Zufuhrvorrichtung (60) das Waschmittel selektiv durch das automatische Waschmittelzufuhrverfahren mittels Betätigung der Ventileinheit (68) zuführt,
die Waschmittel-Zufuhrvorrichtung (60) des Weiteren eine automatische Wasserzufuhrführung (66) umfasst, die dazu konfiguriert ist, Wasser zu dem unteren Teil der Waschmittel-Aufnahmekammer (63) zu leiten, die in das Waschmittelgehäuse (61) eingeschoben ist, wobei Wasserzufuhrventile (15b) so gesteuert werden, dass Wasser nur zu der automatischen Wasserzufuhrführung (66) geleitet wird, wenn die Auswahltaste für manuelle Zufuhr (14a) nicht ausgewählt ist, und
das Waschmittelgehäuse (61) in dem Hauptkörperrahmen (11) durch Fixieren eines Verbindungsteils (61f), der sich integral von einer Rückseite des Waschmittelgehäuses (61) erstreckt, an dem hinteren Ende des Hauptkörper Rahmens (11) durch ein Befestigungselement installiert wird.

2. Waschmaschine nach Anspruch 1, wobei:
der automatische Waschmittelaufnahmeteil (632b, 632c) ein Flüssigwaschmittel aufnimmt und einen Waschmittelausstoßteil (632k) aufweist, der mit einer Waschmittelausstoßöffnung (632j) versehen ist, um das Waschmittel auszustoßen;
die Waschmittel-Zufuhrvorrichtung (60) des Weiteren eine Ventileinheit (68) beinhaltet, die an dem Waschmittelausstoßteil (632k) angeordnet ist, und eine Ventiltriebvorrichtung (69), um die Ventileinheit (68) zu betätigen.

3. Waschmaschine nach Anspruch 1, wobei der automatische Waschmittelaufnahmeteil (632b; 632c) in einen Haupt-Waschmittelaufnahmeteil (632b) zur Aufnahme eines flüssigen Hauptwaschmittels und einen Spüleraufnahmeteil (632c) zur Aufnahme eines Wäschespülers unterteilt ist.

4. Waschmaschine nach Anspruch 2, wobei die Ventiltriebvorrichtung (69) einen Nocken (691) mit einem fächerförmigen Querschnitt beinhaltet, der gedreht wird, um die Ventileinheit (68) zu betätigen, und einen Waschmittelzufuhrmotor (692) zum Drehen des Nockens (691).

5. Waschmaschine nach Anspruch 4, wobei die Ventileinheit (68) ein Ventil (681) beinhaltet, das entsprechend einer Drehung des Nockens (691) aufsteigt und absteigt, und eine Aufstiegs-/Abstiegsführung (682), die das Aufsteigen und Absteigen des Ventils (681) unterstützt, und eine Ventilkappe (683), die an dem Waschmittelausstoßteil (632k) installiert ist, damit die Aufstiegs-/Abstiegsführung (682) an dem Waschmittelausstoßteil (632k) installiert werden kann.

6. Waschmaschine nach Anspruch 5, wobei:
die Aufstiegs-/Abstiegsführung (682) eine Führungsöffnung (682) beinhaltet, in der das Ventil installiert ist, so dass es aufsteigen und absteigen kann, wobei eine erste Ventilöffnung (682c) neben der Führungsöffnung (682b) angeordnet ist und durch das Ventil (681) geöffnet und geschlossen wird, und ein temporärer Aufnahmeraum (682a) in der Aufstiegs-/Abstiegsführung (682) installiert ist, um das Flüssigwaschmittel temporär aufzunehmen;
die Ventilkappe (683) eine zweite Ventilöffnung (683a) aufweist, um das Waschmittel in dem temporären Aufnahmeraum (682a) zur Innenseite des Waschmittelgehäuses (61) auszustoßen; und
das Ventil (681) einen Ventilschaft (681a) beinhaltet, der in der Führungsöffnung (682b) montiert ist, so dass er aufsteigen und absteigen kann, wobei ein erster Ventilteil (681b) oberhalb des Ventilschafts (681a) angeordnet ist, um die erste Ventilöffnung (682c) entsprechend dem Aufsteigen und Absteigen des Ventils (681) zu öffnen und zu schließen, und ein zweiter Ventilteil (681c) unterhalb des Ventils (681a) angeordnet ist, um die zweite Ventilöffnung (683a) zu öffnen und zu schließen.

7. Waschmaschine nach Anspruch 6, wobei die Ventileinheit (68) ein elastisches Element (684) beinhaltet, dessen eines Ende von der Aufstiegs-/Abstiegsführung gelagert wird und dessen anderes Ende von dem zweiten Ventilteil (681c) gelagert wird, und das das Ventil (681) in der Abwärtsrichtung elastisch lagert.

8. Waschmaschine nach Anspruch 5, wobei die Aufstiegs-/Abstiegsführung (682) eine Stützrippe (682b) aufweist, die sich in der radialen Richtung erstreckt und in einen Spalt zwischen dem unteren Ende des Waschmittelausstoßteils (632k) und der Ventilkappe (683) eingesetzt ist.

9. Waschmaschine nach Anspruch 6, wobei der Nocken (691) eine Unterseite des zweiten Ventils (681c) stützt und gedreht wird, um das Ventil (681) anzuheben und abzusenken.

10. Waschmaschine nach Anspruch 4, wobei:
die automatische Wasserzufuhrführung (66) Wasser zu einem unteren Teil der Ventileinheit (68) leitet; und
Sprühöffnungen (66d) zum Sprühen von Wasser in Richtung des unteren Teils der Ventileinheit (68) und des Nockens (691) an dem vorderen Ende der automatischen Wasserzufuhrführung (66) vorgesehen sind, die unterhalb der Ventileinheiten (68) angeordnet ist.

11. Waschmaschine nach Anspruch 3, wobei die Waschmittel-Zufuhrvorrichtung (60) des Weiteren aufweist:
eine Aufnahmeteilabdeckung (64), die den Haupt-Waschmittelaufnahmeteil (632b) und den Spüleraufnahmeteil (632c) abdeckt und mit einem Hauptwaschmitteleinlass (64a) und einem Spülereinlass (64b) versehen ist, so dass das Hauptwaschmittel und der Wäschespüler in den Haupt-Waschmittelaufnahmeteil (632b) und den Spüleraufnahmeteil (632c) durch den Hauptwaschmitteleinlass und den Spülereinlass (64b) eingeleitet werden; und
eine Drehabdeckung (65), die drehbar auf der Aufnahmeteilabdeckung (64) montiert ist und gedreht wird, um den Hauptwaschmitteleinlass (64a) und den Spülereinlass (64b) zu öffnen und zu schließen.

12. Waschmaschine nach Anspruch 3, wobei:
die Waschmittel-Aufnahmekammer (36) eine vordere Abdeckung (631) aufweist, die eine Vorderseite davon bildet, und eine Schale (632), die auf der Rückseite der vorderen Abdeckung (631) installiert ist und mit dem Haupt-Waschmittelaufnahmeteil (632b) und dem Spüleraufnahmeteil (632c) versehen ist; und
die vordere Abdeckung (631) Anzeigen (631b, 631c) aufweist, die es einem Benutzer ermöglichen, die Anwesenheit des Hauptwaschmittels und des Wäschespülers zu beobachten, die in dem Haupt-Waschmittelaufnahmeteil (632b) und dem Spüleraufnahmeteil (632c) aufgenommen sind.

13. Waschmaschine nach einem der vorhergehenden Ansprüche, wobei der manuelle Waschmittelaufnahmeteil (632d; 632e) einen Aufnahmeteil für pulverförmiges Waschmittel (632d) aufweist, um pulverförmiges Waschmittel aufzunehmen, und einen Bleichmittel-Aufnahmeteil (632e) zur Aufnahme eines Bleichmittels.

14. Waschmaschine nach Anspruch 13, wobei:
die Waschmittel-Zufuhrvorrichtung (60) eine Gehäuseabdeckung (62) beinhaltet, die so montiert ist, dass sie die Oberseite des Waschmittelgehäuses (61) und die manuelle Wasserzufuhrführung (67) abdeckt, die an der Unterseite der Gehäuseabdeckung (62) fixiert ist, um Wasser zu den manuellen Waschmittel-Aufnahmeteilen zu leiten; und
die Innenseite der manuellen Wasserzufuhrführung (67) in einen Wasserzufuhrkanal (67b) für das pulverförmige Waschmittel zum Zuführen von Wasser zu dem Aufnahmeteil (632d) für pulverförmiges Waschmittel und einen Wasserzufuhrkanal (67c) für das Bleichmittel unterteilt ist, um Wasser zu dem Bleichmittel-Aufnahmeteil (632e) zu leiten.

15. Waschmaschine nach Anspruch 13, wobei:
die Waschmittel-Zufuhrvorrichtung (60) das Weiteren eine Aufnahmeteilabdeckung (64) beinhaltet, die den automatischen Waschmittel-Aufnahmeteil (632b; 632c) abdeckt;
die Aufnahmeabdeckung (64) einen Einlass (64c) für pulverförmiges Waschmittel zum Einführen des pulverförmigen Waschmittels in den Aufnahmeteil (632b) für pulverförmiges Waschmittel dort hindurch und einen Bleichmitteleinlass (64d) aufweist, um das Bleichmittel dort hindurch in den Bleichmittel-Aufnahmeteil (632e) einzuführen; und
Wasserzufuhröffnungen (67d) auf den Unterseiten des Wasserzufuhrkanals (67b) für das pulverförmige Waschmittel und des Wasserzufuhrkanals (67c) für das Bleichmittel an Positionen angeordnet sind, die mit dem Einlass (64c) für pulverförmiges Waschmittel und dem Bleichmitteleinlass (64d) korrespondieren.

16. Waschmaschine nach Anspruch 15, wobei die Aufnahmeteilabdeckung des Weiteren eine abgeschrägte Führung (64e) beinhaltet, die abwärts in Richtung des Bleichmitteleinlasses (64d) geneigt und neben dem Bleichmitteleinlass (64b) ausgebildet ist.

## Revendications

1. Machine à laver, comprenant :
un corps principal (10) comprenant un châssis de corps principal (11) ;
un panneau de commande (14) comprenant un bouton de sélection d'alimentation manuelle (14a) ;
une cuve (20) disposée dans le corps principal (10) pour contenir de l'eau ; un tambour (30) installé de manière rotative dans la cuve (20) ; et
un dispositif d'alimentation de détergent (60) pour fournir des détergents ainsi que l'eau dans la cuve (20), dans laquelle :
le dispositif d'alimentation de détergent (60) inclut un logement de détergent (61) installé dans le corps principal (10), un couvercle de logement (62) installé pour couvrir la partie supérieure du logement de détergent (61) et un bac d'hébergement de détergent (63) installé de manière mobile dans le logement de détergent (61) ; et
le bac d'hébergement de détergent (63) est divisé en une partie d'hébergement de détergent automatique (632b ; 632c) et une partie d'hébergement de détergent manuel (632d ; 632e) pour héberger un détergent à évacuer par un écoulement d'eau alimentée à la partie d'hébergement de détergent manuel (632d, 632e), et le dispositif d'alimentation de détergent (60) alimente sélectivement les détergents par l'un d'un procédé d'alimentation de détergent automatique et d'un procédé d'alimentation de détergent manuelle, dans laquelle le bouton de sélection d'alimentation manuelle (14a) est configuré pour choisir l'un des procédés d'alimentation de détergent,
dans laquelle le dispositif d'alimentation de détergent (60) comporte en outre un guide d'alimentation d'eau manuelle (67) fixé à la surface inférieure du couvercle de logement (62) pour fournir de l'eau aux parties d'hébergement de détergent manuelle (632d, 632e),
**caractérisée en ce que**
la partie d'hébergement de détergent automatique (632b, 632c) est configurée pour héberger un détergent à évacuer à travers une unité de soupape (68) disposée d'un côté de la partie d'hébergement de détergent automatique (632b, 632c), et le dispositif d'alimentation de détergent (60) alimente sélectivement ledit détergent par le procédé d'alimentation de détergent automatique au moyen d'un actionnement de l'unité de soupape (68),
le dispositif d'alimentation de détergent (60) comporte en outre un guide d'alimentation d'eau automatique (66) configuré pour guider l'eau vers la partie inférieure du bac d'hébergement de détergent (63) rétracté dans le logement de détergent (61), dans laquelle des soupapes d'alimentation d'eau (15b) sont commandées pour fournir de l'eau vers le guide d'alimentation d'eau automatique (66) si le bouton de sélection d'alimentation manuelle (14a) n'est pas sélectionné, et le logement de détergent (61) est installé dans le châssis de corps principal (11) en fixant une pièce d'accouplement (61f) étendue intégralement depuis une surface arrière du logement de détergent (61) jusqu'à l'extrémité arrière du châssis de corps principal (11) par l'intermédiaire d'un élément de fixation.

2. Machine à laver selon la revendication 1, dans laquelle :
la partie d'hébergement de détergent automatique (632b ; 632c) héberge un détergent liquide et comprend une partie d'évacuation de détergent (632k) pourvue d'un orifice d'évacuation de détergent (632j) pour évacuer le détergent ;
le dispositif d'alimentation de détergent (60) comprend en outre une unité de soupape (68) disposée au niveau de la partie d'évacuation de détergent (632k), et un dispositif d'entraînement de soupape (69) pour actionner l'unité de soupape (68).

3. Machine à laver selon la revendication 1, dans laquelle la partie d'hébergement de détergent automatique (632b ; 632c) est divisée en une partie d'hébergement de détergent principal (632b) destinée à héberger un détergent principal liquide, et une partie d'hébergement de rinçage (632c) pour héberger un rinçage de tissu.

4. Machine à laver selon la revendication 2, dans laquelle le dispositif d'entraînement de soupape (69) inclut une came (691) ayant une section transversale en forme d'éventail et mise en rotation pour actionner l'unité de soupape (68), et un moteur d'alimentation de détergent (692) pour mettre la came (691) en rotation.

5. Machine à laver selon la revendication 4, dans laquelle l'unité de soupape (68) comprend une soupape (681) montante et descendante selon la rotation de la came (691), un guide montant/descendant (682) supportant la soupape (681) pour faire monter et descendre la soupape (681), et un bouchon de soupape (683) installé au niveau de la partie d'évacuation de détergent (632k) pour installer le guide montant/descendant (682) sur la partie d'évacuation de détergent (632k).

6. Machine à laver selon la revendication 5, dans laquelle :
le guide montant/descendant (682) inclut un orifice de guide (682b) dans lequel la soupape (681) est installée pour être capable de monter et de descendre, un premier orifice de soupape (682c) fourni adjacent à l'orifice de guide (682b) et ouvert et fermé par la soupape (681), et un espace de stockage temporaire (682a) installé dans le guide montant/descendant (682) pour héberger temporairement le détergent liquide ;
le bouchon de soupape (683) inclut un deuxième orifice de soupape (683a) pour évacuer le détergent situé dans l'espace de stockage temporaire (682a) à l'intérieur du logement de détergent (61) ; et
la soupape (681) inclut une tige de soupape (681a) installée dans l'orifice de guide (682b) pour être capable de monter et de descendre, une première partie de soupape (681b) disposée au-dessus de la tige de soupape (681a) pour ouvrir et fermer le premier orifice de soupape (682c) selon la montée et la descente de la soupape (681), et une deuxième partie de soupape (681c) disposée sous la tige de soupape (681a) pour ouvrir et fermer le deuxième orifice de soupape (683a).

7. Machine à laver selon la revendication 6, dans laquelle l'unité de soupape (68) comprend un élément élastique (684) pourvu d'une extrémité supportée par le guide montant/descendant (682) et de l'autre extrémité supportée par la deuxième partie de soupape (681c), et supportant élastiquement la soupape (681) dans la direction vers le bas.

8. Machine à laver selon la revendication 5, dans laquelle le guide montant/descendant (682) comprend une nervure de support (682d) étendue dans la direction radiale et insérée dans un espace entre l'extrémité inférieure de la partie d'évacuation de détergent (632k) et le bouchon de soupape (683).

9. Machine à laver selon la revendication 6, dans laquelle la came (691) supporte une surface inférieure de la deuxième partie de soupape (681c) et est mise en rotation pour faire monter et descendre la soupape (681).

10. Machine à laver selon la revendication 4, dans laquelle :
le guide d'alimentation d'eau automatique (66) guide l'eau vers une partie inférieure de l'unité de soupape (68) ; et
des orifices de pulvérisation (66d) pour pulvériser l'eau vers la partie inférieure de l'unité de soupape (68) et la came (691) est fournis à l'extrémité avant du guide d'alimentation d'eau automatique (66) disposé au-dessous des unités de soupape (68).

11. Machine à laver selon la revendication 3, dans laquelle le dispositif d'alimentation de détergent (60) comprend en outre :
un couvercle de partie d'hébergement (64) couvrant la partie d'hébergement de détergent principal (632b) et la partie d'hébergement de rinçage (632c) et muni d'une entrée de détergent principal (64a) et d'une entrée de rinçage (64b) de sorte que le détergent principal et le rinçage de tissu soient disposés dans la partie d'hébergement de détergent principal (632b) et la partie d'hébergement de rinçage (632c) à travers l'entrée de détergent principal (64a) et l'entrée de rinçage (64b) ; et
un couvercle rotatif (65) installé de manière rotative sur le couvercle de partie d'hébergement (64) et mis en rotation pour ouvrir et fermer l'entrée de détergent principal (64a) et l'entrée de rinçage (64b).

12. Machine à laver selon la revendication 3, dans laquelle :
le bac d'hébergement de détergent (63) comprend un couvercle avant (631) formant sa surface avant, et un plateau (632) installé à l'arrière du couvercle avant (631) et pourvu de la partie d'hébergement de détergent principal (632b) et de la partie d'hébergement de rinçage (632c) ; et
le couvercle avant (631) comprend les indicateurs (631b, 631c) permettant à un utilisateur d'observer la présence du détergent principal et du rinçage de tissu hébergés dans la partie d'hébergement de détergent principal (632b) et la partie d'hébergement de rinçage (632c).

13. Machine à laver selon une des revendications précédentes, dans laquelle la partie d'hébergement de détergent manuel (632d ; 632e) comprend une partie d'hébergement de détergent en poudre (632d) destinée à héberger un détergent en poudre et une partie d'hébergement d'agent de blanchiment (632e) destinée à héberger un agent de blanchiment.

14. Machine à laver selon la revendication 13, dans laquelle :
le dispositif d'alimentation de détergent (60) comprend un couvercle de logement (62) installé pour couvrir la surface supérieure du logement de détergent (61) et le guide d'alimentation d'eau manuelle (67) fixé sur la surface inférieure du couvercle de logement (62) pour fournir l'eau vers les parties d'hébergement de détergent manuel ; et
l'intérieur du guide d'alimentation d'eau manuelle (67) est divisé en un canal d' alimentation de détergent en poudre (67b) pour fournir l'eau vers la partie d'hébergement de détergent en poudre (632d) et un canal d' alimentation en eau d'agent de blanchiment (67c) pour fournir l'eau vers la partie d'hébergement d'agent de blanchiment (632e).

15. Machine à laver selon la revendication 13, dans laquelle :
le dispositif d'alimentation de détergent (60) comprend en outre un couvercle de partie d'hébergement (64) couvrant la partie d'hébergement de détergent automatique (632b ; 632c) ;
le couvercle d'hébergement (64) comprend une admission de détergent en poudre (64c) pour injecter le détergent en poudre dans la partie d'hébergement de détergent en poudre (632d) à travers celle-ci, et une entrée d'agent de blanchiment (64d) pour injecter l'agent de blanchiment dans la partie d'hébergement d'agent de blanchiment (632e) à travers celle-ci ; et
des trous d'alimentation d'eau (67d) sont fournis sur les surfaces inférieures du canal d'alimentation en eau de détergent en poudre (67b) et du canal d'alimentation en eau d'agent de blanchiment (67c) dans des positions correspondant à l'entrée de détergent en poudre (64c) et à l'entrée d'agent de blanchiment (64d).

16. Machine à laver selon la revendication 15, dans laquelle le couvercle de partie d'hébergement comprend en outre un guide incliné (64e) qui est incliné vers le bas en direction de l'entrée d'agent de blanchiment (64d) et formé adjacent à l'entrée d'agent de blanchiment (64d).
